# EUROPEAN PATENT SPECIFICATION

(11) **EP 4 484 289 B1**
(45) Date of publication and mention of the grant of the patent: **10.12.2025**
(21) Application number: 24176285.5
(22) Date of filing: 16.05.2024
(51) Int. Cl.: B64D 13/02, B64D 13/06, B64D 41/00

(54) **AIRCRAFT COMPRISING A CABIN BLOWER SYSTEM**
FLUGZEUG MIT KABINENGEBLÄSESYSTEM
AÉRONEF COMPRENANT UN SYSTÈME DE SOUFFLANTE DE CABINE

(30) Priority: 28.06.2023 GR 20230100523
(43) Date of publication of application: 01.01.2025
(73) Proprietor: Rolls-Royce plc, London N1 9FX (GB)
(72) Inventor: Bacic, Marko, Derby, DE24 8BJ (GB); Pachidis, Vasileios, Derby, DE24 8BJ (GB); Saias, Chana, Derby, DE24 8BJ (GB)
(74) Representative: Rolls-Royce plc

(56) References cited:
- EP-A1- 1 035 016
- US-B2- 8 640 439

## Description

### TECHNICAL FIELD

The invention relates to aircraft comprising cabin blower systems.

### BACKGROUND

A cabin blower system is a system which provides ventilation air to a cabin space of an aircraft. A cabin blower system typically forms part of an environmental control system which provides air at appropriate temperature and pressure to a passenger cabin, cockpit or similar cabin space. A cabin blower system of an aircraft may also provide air for further functions, such as wing or engine cowl de-icing or ice protection.

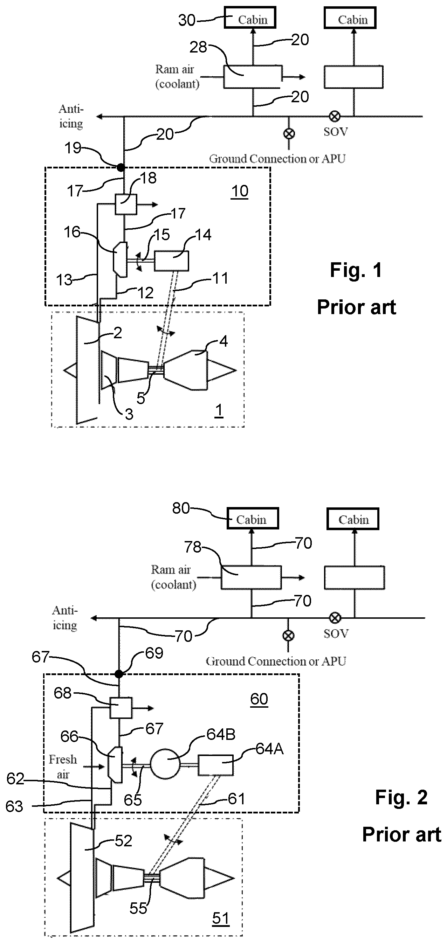

Figure 1 schematically shows apparatus comprised in an aircraft of the prior art, the apparatus comprising a turbofan engine 1, a cabin blower system 10, a ducting system 20, an air-conditioning system 28 and a cabin 30. The cabin blower system 10 comprises a cabin blower compressor 16 driven by mechanical power derived from the turbofan engine 1 via an off-take shaft or dedicated radial drive 11 engaged with a shaft 5 of the turbofan engine 1 and a transmission 14 having an output shaft 15 coupled to the cabin blower compressor 16. The shaft 5 may be a high- or low-pressure shaft if the turbofan engine 1 is a two-spool engine; alternatively the off-take 11 may be engaged with both high- and low-pressure shafts. The turbofan engine 1 has a fan case 2, a compressor section 3, a turbine section 4 and a combustor section (not shown in Figure 1 in the interests of clarity). Fan delivery air is provided from the fan case 2 to the cabin blower compressor 16 via a duct 12. (Alternatively, bypass air, ram air or bleed air from early stages of the compressor section 3 may be input to the cabin blower compressor 16). Compressed air output by the cabin blower compressor 16 passes to a heat exchanger 18 via a duct 17 which passes through the heat exchanger 18. The heat-exchanger 18 is arranged to receive fan delivery air from the fan case 2 via a duct 13. Cooled compressed air is provided to an output 19 of the cabin blower system 10 and thence to ducting 20 for onward delivery to the cabin 30 via the air-conditioning system 28, and/or to aircraft parts requiring de-icing or ice protection. The transmission 14 allows the speed of the cabin blower compressor 16 to be controlled independently or substantially independently of the speed of the shaft 5.

Figure 2, in which parts are labelled with reference signs differing by 50 from those labelling corresponding parts in Figure 1, shows other aircraft apparatus of the prior art. Mechanical power from a shaft 55 of a turbofan engine 51 is provided via a radial drive 61 to an electrical generator 64A which provides electrical power to an electric motor 64B. The motor 64B provides mechanical power to a cabin blower compressor 66 via an output shaft 5 of the motor 64B.

A significant disadvantage associated with a cabin blower system of the prior art, such as the system 10 of Figure 1 or the system 60 of Figure 2, is that it is over-sized for the majority of nominal operating conditions, i.e. it produces a greater mass flow rate of compressed air than is typically required during a flight cycle. In other words the cabin blower system has excess capacity, resulting in a fuel consumption penalty on an engine driving the system. The (normally) excess capacity must however be available in order to meet failure requirements and critical flight conditions which may arise, such as operation in an ice environment and during engine idling. However, operating the cabin blower compressor at a lower capacity penalises the compressor's stability and reduces its efficiency and so does not provide a satisfactory solution to the problem of the fuel consumption penalty. Such operation may not even be possible since the transmission via which a cabin blower compressor is driven may preclude operation of the cabin blower compressor at a speed below that consistent with a minimum level of efficiency. If the transmission is capable of a speed ratio which does allow such operation, it is likely to be of substantial size and to represent a further weight penalty to an aircraft comprising the cabin blower system.

Published European Patent Application EP 1035 016 A1 discloses an auxiliary power unit (APU) for an aircraft, the APU comprising a gas turbine engine, a compressor mounted on a shaft of the gas turbine engine and a fuel cell. In use of the APU, a portion of the compressed air output by the compressor is provided to fuel the cell and the remainder is used for cabin ventilation within the aircraft.

US patent US 8640 439 B2 discloses a hybrid drive arrangement for an aircraft, the arrangement comprising a gas turbine engine, a fuel cell and an electric motor. In operation of the hybrid drive arrangement, bleed air from the compressor section of the gas turbine engine is provided to a cabin of an aircraft comprising the hybrid drive arrangement. Air output from the cabin is input to the fuel cell. Electrical power output from the fuel cell provided to an electric motor. In a first (single clutch) arrangement, the gas turbine engine drives a propulsor, either alone or in combination with the fuel cell and electric motor. In a second (dual clutch) arrangement, the propulsor may be driven by the gas turbine engine alone, the fuel cell and electric motor alone (the gas turbine still being operated to provide compressed air to the fuel cell), or by both the gas turbine engine and the fuel cell/ electric motor.

### BRIEF SUMMARY

A first aspect of the invention provides an aircraft comprising:
an internal combustion engine arranged to provide propulsive thrust to the aircraft;
a cabin blower system comprising a cabin blower compressor and a drive arrangement engaged with the internal combustion engine and arranged to transmit mechanical power from the internal combustion engine to the cabin blower compressor;
a ducting system arranged to deliver a first portion of the mass flow rate of compressed air output by the cabin blower compressor to a cabin space of the aircraft;
wherein
   (i) the aircraft further comprises a fuel cell stack comprising at least one fuel cell and an electric motor arranged to receive electrical power from the fuel cell stack;
   (ii) the ducting system is arranged to deliver a second portion of the mass flow rate of compressed air output by the cabin blower compressor to the cathode input of the fuel cell stack, the second portion being in excess of that required for ventilation of the cabin space; and
   (iii) the electric motor is engaged with either a shaft of the internal combustion engine to provide mechanical power thereto, or with the drive arrangement to provide mechanical power to the cabin blower compressor via the drive arrangement.

In operation of the aircraft, a portion of the mass flow rate of compressed air output by the cabin blower compressor which is in excess of that required for ventilation of the cabin space is provided to the cathode input of the fuel cell stack. By recovering mechanical power back to the engine or to the cabin blower compressor, the fuel consumption penalty on the engine is mitigated or eliminated.

The drive arrangement may comprise a transmission system having an output shaft coupled to the cabin blower compressor and an input shaft engaged with a shaft of the internal combustion engine. The range of speed variation required of the transmission is less than that required of cabin blower system of the prior art, allowing a transmission of smaller physical size and lower weight to be used.

The internal combustion engine may be a gas turbine engine, the input shaft of the transmission system and the electric motor being engaged with a common shaft of the gas turbine engine. Alternatively, the input shaft of the transmission system may be engaged with a first shaft of the gas turbine engine and the electric motor may be engaged with a second shaft of the gas turbine engine, allowing power to be transferred from the first shaft to the second shaft.

The electric motor may be engaged with either the input shaft or the output shaft of the transmission system.

The fuel cell stack may be electrically disengaged from the electric motor and arranged to deliver electrical power to an auxiliary system of the aircraft, or mechanically disengaged with either the internal combustion engine or the drive arrangement as the case may be and arranged to deliver mechanical power to an auxiliary system of the aircraft.

The ducting system may comprise a regulator valve, a first duct coupling the output of the cabin blower system to an input of the regulator valve, a second duct coupling a first output of the regulator valve to the cathode input of the fuel cell stack and a third duct coupling a second output of the regulator valve to the cabin space of the aircraft, the regulator valve being operable to control respective proportions of the mass flow rate of compressed air output by the cabin blower system which are delivered to the cabin space and to the cathode input of the fuel cell stack.

The aircraft may further comprise apparatus operable to provide compressed air to the cathode input of the fuel cell stack independently of the cabin blower compressor. Thus, if 100% of the mass flow rate of compressed air output by the cabin blower compressor is directed to the cabin space, the fuel cell stack may nevertheless be operated.

The internal combustion engine may be a hydrogen-burning engine, the aircraft further comprising a fuel tank storing liquid hydrogen and conveying means arranged to deliver hydrogen fuel from the fuel tank to the internal combustion engine and boiled-off and/or vented gaseous hydrogen from the fuel tank to the anode input of the fuel cell stack.

According to a second aspect of the invention, there is provided a method of recovering power associated with a portion of a total mass flow rate of compressed air output by a cabin blower compressor of an aircraft, the cabin blower compressor being driven by a propulsive internal combustion engine of the aircraft via a drive arrangement and the portion being in excess of that required for ventilation of a cabin space of the aircraft, the method comprising the steps of:
(i) dividing the portion from the total mass flow rate of compressed air output by the cabin blower compressor;
(ii) directing said portion into the cathode input of a fuel cell stack comprising at least one fuel cell to generate electrical power;
(iii) applying the electrical power to an electric motor to generate mechanical power; and
(iv) providing the mechanical power either
   (a) to the engine; or
   (b) to the cabin blower compressor via the drive arrangement.

### BRIEF DESCRIPTION OF THE DRAWINGS

Embodiments of the invention are described below by way of example only and with reference to the accompanying drawings in which:
- Figures 3 & 5: show first and second examples of aircraft apparatus of the invention, respectively;
- Figures 4 & 6: show first and second example aircraft of the invention respectively, comprising the aircraft apparatus of Figures 3 & 5 respectively; and
- Figure 7: shows steps in an example method for providing compressed air to the cathode input of a fuel cell stack.

### DETAILED DESCRIPTION

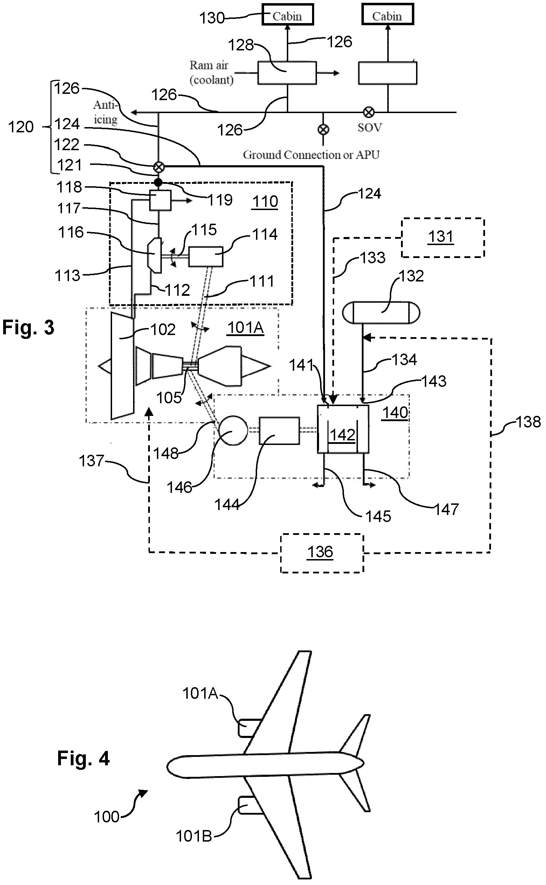

Referring to Figures 3 and 4, a first example aircraft 100 of the invention comprises first and second turbofan engines 101A, 101B, a cabin blower system 110, a ducting system 120, an air-conditioning system 128, a cabin 130, a hydrogen fuel tank 132 and a fuel cell system 140 comprising a polymer-electrolyte (proton-exchange) membrane (PEM) fuel cell stack 142 having one or more individual PEM fuel cells. The first turbofan engine 101A comprises a fan case 102 and an engine shaft 105. The cabin blower system 110 comprises a cabin blower compressor 116 (a centrifugal compressor) and a transmission system 114 having input and output shafts 111, 115 engaged with the engine shaft 105 and the cabin blower compressor 116 respectively. In operation of the aircraft 100, compressed air output from the cabin blower compressor 116 is delivered to a system output 119 of the cabin blower system 110 via a duct 117 which passes through a heat-exchanger 118. The cabin blower compressor 116 and the heat-exchanger 118 are supplied with fan delivery air via ducts 112, 113 respectively which are connected to the fan case 102. The heat-exchanger 118 cools the compressed air output by the cabin blower compressor 116 prior to its delivery to the system output 119. The transmission 114 may comprise discrete gears or it may be continuously-variable transmission (CVT). The transmission 114 may be of a type described in patents EP 3034405 B1 or EP 3517436 B1 (i.e. including a mechanical or electrical variator). The transmission 114 allows the speed of the compressor 116 to be controlled independently or substantially independently of the speed of the engine shaft 105. In variants of the aircraft 100, the cabin blower compressor 116 and/or the heat-exchanger 118 are supplied with bypass air of the turbofan engine 101A or with ram air of the aircraft 100.

The ducting system 120 comprises a first duct 121 coupling the system output 119 of the cabin blower system 110 to an input of a regulator valve 122 and second and third ducts 124, 126 coupling first and second outputs of the regulator valve 122 to the fuel cell system 140 and to a cabin 130 of the aircraft 100, via an air-conditioning system 128, respectively. The regulator valve 122 allows the proportions of the mass flow rate of compressed air output by the cabin blower compressor 116 which are provided to the fuel cell system 140 and to the air-conditioning system 128 (or to the air-conditioning system 128 and parts of the aircraft 100 requiring de-icing) to be adjusted. The duct 124 delivers compressed air to the cathode input 141 of the PEM fuel cell stack 142. Hydrogen fuel is provided to the anode input 143 of the PEM fuel cell stack 142 from the hydrogen fuel tank 132 via a duct 134. The fuel cell system 140 further comprises an electric motor 146 arranged to receive electrical power output by the PEM fuel cell stack 142 via a power management system 144 and to provide mechanical power to the engine shaft 105 via an output shaft 148 of the electric motor 146, the output shaft 148 being mechanically engaged with the engine shaft 105.

In operation of the aircraft 100, the mass flow rate of compressed air, output by the cabin blower compressor 116, in excess of that required for ventilation of the cabin 130 is provided to the cathode input 141 of the PEM fuel cell stack 142. The fuel cell system 140 allows power associated with the excess capacity of the cabin blower compressor 216 to be recovered and provided to the turbofan engine 101A, thus mitigating, and possibly eliminating, the fuel consumption penalty on the turbofan engine 101A corresponding to the excess capacity. The PEM fuel cell stack 142 has cathode and anode exhausts 145, 147; cathode exhaust (i.e. hot air and water vapour) may be used for functions such as de-icing, ice protection, fuel heating and oil heating within the aircraft 100. The pressure of compressed air delivered to the cathode input 141 of the PEM fuel cell stack 142 is typically sufficient to allow high-efficiency operation of the PEM fuel cell stack 142, for example much higher efficiency than that achievable using ram air.

The regulator valve 122 allows the proportion of the mass flow rate of compressed air output by the cabin blower system 110 at the system output 119 and delivered to the cathode input 141 of the PEM fuel cell stack 142 to be varied continuously. That proportion may be zero percent if the whole of the mass flow rate of compressed air output by the cabin blower system 110 is required for ventilation of the cabin 130, or for cabin ventilation and de-icing, for example during critical flight conditions. In that case, the cabin blower compressor 116 operates with high efficiency at or close to its design point, and since the full capacity of the cabin blower system 110 is utilised, the cabin blower compressor 116 has no excess capacity and there is no corresponding fuel consumption penalty on the turbofan engine 101A. Nevertheless the fuel cell system 140 may continue to operate if apparatus 131 is present which can provide compressed air to the cathode input 141 of the PEM fuel cell stack 142 via a duct 133 independently of the cabin blower system 110. The apparatus 131 could be a source of ram air or compressor bleed air or bypass air from either or both turbofan engines 201A, 201B. If the apparatus 131 is operable to provide compressed air to the cathode input 141 of the PEM fuel cell stack 142 when the aircraft 100 is stationary on the ground, then the fuel cell system 140 may be used to start the turbofan engine 201A; for example the apparatus 131 may be a small, independently-powered compressor.

Whether or not the apparatus 131 is present, the motor output shaft 148 or the PEM fuel cell stack 142 may be respectively mechanically or electrically disconnectable from the engine shaft 105 or the power management system 144 so that mechanical or electrical power may be delivered to an auxiliary system of the aircraft 100, such as a hydraulic system, pumps, controllers, instrumentation, navigation system etc. The power associated with the excess capacity of the cabin blower system 110 may thus be directed to an auxiliary function, rather than being recovered to the turbofan engine 101A. The fuel cell system 140 may be applied to the auxiliary function during a part or parts of a flight cycle and used to recover power to the turbofan engine 101A during remaining parts of the flight cycle. The fuel cell system 140 may be comprised in the aircraft 100 principally to power one or more auxiliary systems, the arrangement of Figure 3 being put into effect when it is not required to power an auxiliary system, thus making use of the fuel cell system 140 when it would otherwise be idle and thus simply parasitic weight. If the apparatus 131 is present, the fuel cell system 140 may be utilised, even if the regulator valve 122 is adjusted so that 100% of the mass flow rate of compressed air output by the cabin blower system 110 is directed to the air-conditioning system 128 (and then to the cabin 130), or to the air-conditioning system 128 and parts of the aircraft requiring de-icing or ice protection.

The engine shaft 105 with which the transmission input shaft 111 and the motor output shaft 148 are engaged may be the high- or low-pressure shaft of the turbofan engine 101A where the engine 101A is a two-spool engine. If the turbofan engine 101A is a three-spool engine, the shaft 105 may be a high-, low- or intermediate-pressure shaft of the engine 101A. In a variant of the aircraft 100, the motor output shaft 148 and the transmission input shaft 111 may be coupled to different shafts of the turbofan engine 101A, thus allowing power to be transferred between shafts. For example, if the turbofan engine 101A has two spools, the transmission input shaft 111 may be engaged with the low-pressure shaft of the turbofan engine 101A and the motor output shaft 148 may be engaged with the high-pressure shaft of the turbofan engine 101A. If the turbofan engine 101A has three spools, the transmission input shaft 111 may be engaged with or coupled to the low-, intermediate- or high-pressure shaft of the turbofan engine 101A and the motor output shaft 148 may be engaged with or coupled to one of the other two shafts of the turbofan engine 101A. By making appropriate choices for the engine shafts with which the transmission input shaft 111 and the motor output shaft 148 are engaged, the work split between the shafts may be controlled, improving engine operability and time-on-wing.

The cabin blower compressor 116 runs at or near its maximum capacity, and hence at or near maximum efficiency, for most of an operational period of the aircraft 100. The transmission 114 therefore needs to provide less speed variation than the transmission 14 in an aircraft of the prior art which comprises the arrangement of Figure 1, allowing the transmission 114 to have lower size and weight.

The turbofan engines 101A, 101B may be hydrogen-burning turbofan engines, the aircraft 100 further including a hydrogen fuel store 136 and conveying means 137 for delivering hydrogen fuel from the hydrogen fuel store 136. In this case, hydrogen fuel may also be provided to the anode input 143 of the PEM fuel cell stack 142 from the hydrogen fuel tank 136 via conveying means 138 and the hydrogen fuel store 132 dispensed with. If the hydrogen fuel store 136 stores liquid hydrogen, then gaseous hydrogen resulting from venting of the hydrogen fuel tank 136, or boil-off from the liquid hydrogen stored therein, may be used to supply the PEM fuel cell stack 142, rather than being wasted, as would be the case in the prior art arrangements of Figures 1 and 2 where the turbofan engines 1, 51 are hydrogen-burning engines.

In variants of the aircraft 100, the fuel cell stack 142 may be of a type other than a PEM or high-temperature PEM fuel cell stack, provided one of its inputs may use compressed air from the cabin blower compressor 116. The hydrogen fuel store 132 may store gaseous or liquid hydrogen. If the hydrogen fuel store 132 stores liquid hydrogen, further apparatus may be required to vaporise stored liquid hydrogen prior to its input to the anode input 143 of the PEM fuel cell stack 142. Similarly, if the turbofan engine 101A is a hydrogen-burning engine, further apparatus may be required to vaporised liquid hydrogen store in the hydrogen fuel store 136 prior to its input to the combustor of the turbofan engine 101A.

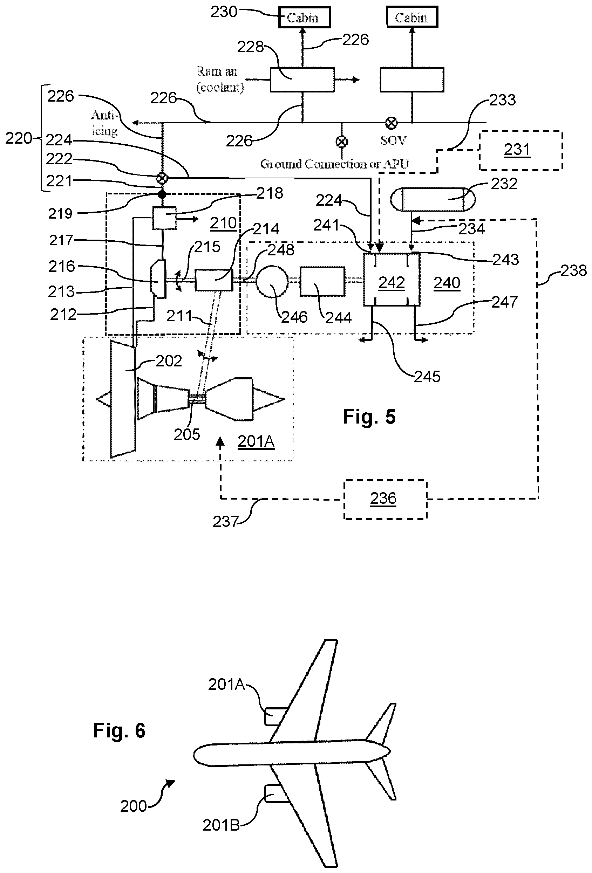

Referring to Figures 5 and 6, in which parts are labelled with reference numerals differing by 100 from those labelling corresponding parts in Figures 3 and 4, a second example aircraft 200 of the invention comprises turbofan engines 201A, 201B, a cabin blower system 210, a ducting system 220 and a cabin 230. Output shaft 248 of electric motor 246, which is comprised in fuel cell system 240, is either engaged with the input of transmission system 214 together with transmission input shaft 211, or with the output of the transmission system 214, in which case the motor output shaft 248 may be directly coupled to transmission output shaft 215.

The arrangement of Figure 5 operates similarly to the arrangement of Figure 3, except that power associated with the excess capacity of cabin blower compressor 216 is recovered to the cabin blower compressor 216 itself, rather than to turbofan engine 201A, in order to mitigate or eliminate the fuel consumption penalty on the turbofan engine 201A associated with the excess capacity.

During descent of the aircraft 200 from cruise conditions, input shaft 211 may be disengaged with engine shaft 204 such that cabin blower compressor 216 is power entirely by fuel cell system 240. Alternatively, the fuel cell system 240 may provide mechanical power to both cabin blower system 210 and to turbofan engine 201A.

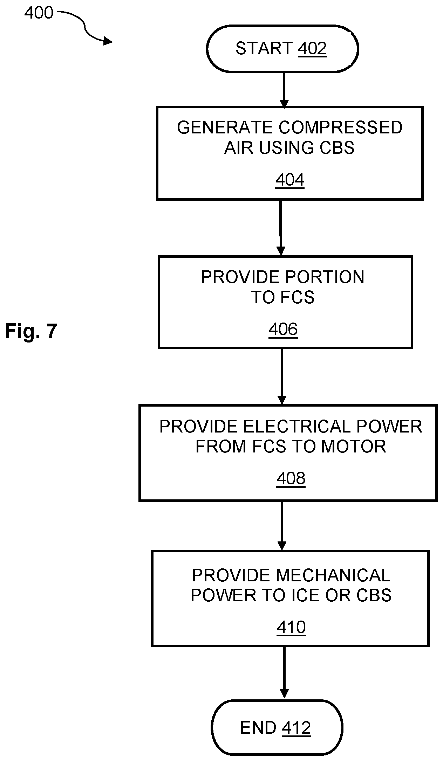

Figure 7 shows a flowchart illustrating steps in a method 400 of the invention. Following starting 402 of the method, compressed air is generated 404 using a cabin blower system (CBS) of the aircraft. A portion of the mass flow rate of compressed air output by the cabin blower system is provided 406 to the cathode input of the fuel cell stack. Electrical power generated by the fuel cell stack is provided 408 to an electric motor. Mechanical power from the electric motor is provided 410 to a shaft of an internal combustion engine (such as a gas turbine engine), a portion of the mechanical output power of which is provided to the cabin blower system in order to drive it. The method then ends 412.

## Claims

1. An aircraft (100; 200) comprising:
an internal combustion engine (101A; 201A) arranged to provide propulsive thrust to the aircraft;
a cabin blower system (110; 210) comprising a cabin blower compressor (116; 216) and a drive arrangement (111, 114, 115; 211, 214, 215) engaged with the internal combustion engine and arranged to transmit mechanical power from the internal combustion engine to the cabin blower compressor;
and
a ducting system (120; 220) arranged to deliver a first portion of the mass flow rate of compressed air output by the cabin blower compressor to a cabin space (130; 230) of the aircraft;
wherein
(i) the aircraft further comprises a fuel cell stack (142; 242) comprising at least one fuel cell and an electric motor (146; 246) arranged to receive electrical power from the fuel cell stack;
(ii) the ducting system is arranged to deliver a second portion of the mass flow rate of compressed air output by the cabin blower compressor to the cathode input (141; 241) of the fuel cell stack, the second portion being in excess of that required for ventilation of the cabin space; and
(iii) the electric motor is engaged with either a shaft of the internal combustion engine to provide mechanical power thereto, or with the drive arrangement to provide mechanical power to the cabin blower compressor via the drive arrangement.

2. An aircraft (100; 200) according to claim 1 wherein the drive arrangement comprises a transmission system (114; 214) having an output shaft (115; 215) coupled to the cabin blower compressor and an input shaft (111; 211) engaged with a shaft of the internal combustion engine.

3. An aircraft (100) according to claim 2 wherein the internal combustion engine is a gas turbine engine, and the input shaft of the transmission system and the electric motor are engaged with a common shaft (105) of the gas turbine engine.

4. An aircraft (100) according to claim 2 wherein the internal combustion engine is a gas turbine engine, the input shaft of the transmission system is engaged with a first shaft of the gas turbine engine and the electric motor is engaged with a second shaft of the gas turbine engine.

5. An aircraft (200) according to claim 2 wherein the electric motor is engaged with either the input shaft or the output shaft of the transmission system.

6. An aircraft (100; 200) according to any preceding claim wherein
(a) the fuel cell stack may be electrically disengaged from the electric motor and arranged to deliver electrical power to an auxiliary system of the aircraft; or
(b) the electric motor may be mechanically disengaged with either the internal combustion engine or the drive arrangement as the case may be and arranged to deliver mechanical power to an auxiliary system of the aircraft.

7. An aircraft (100; 200) according to any preceding claim wherein the ducting system comprises a regulator valve (122; 222), a first duct (121; 221) coupling the output (119; 219) of the cabin blower system to an input of the regulator valve, a second duct (124; 224) coupling a first output of the regulator valve to the cathode input of the fuel cell stack and a third duct (126; 226) coupling a second output of the regulator valve to the cabin space of the aircraft, wherein the regulator valve is operable to control respective proportions of the mass flow rate of compressed air output by the cabin blower system which are delivered to the cabin space and to the cathode input of the fuel cell stack.

8. An aircraft (100; 200) according to any preceding claim further comprising apparatus (131, 133; 231, 233) operable to provide compressed air to the cathode input of the fuel cell stack independently of the cabin blower compressor.

9. An aircraft (100; 200) according to any preceding claim wherein the internal combustion engine is a hydrogen-burning engine and the aircraft further comprises a fuel tank (132; 232) storing liquid hydrogen and conveying means (137, 138; 237, 238) arranged to deliver hydrogen fuel from the fuel tank to the internal combustion engine and boiled-off and/or vented gaseous hydrogen from the fuel tank to the anode input (143; 243) of the fuel cell stack.

10. A method of recovering power associated with a portion of a total mass flow rate of compressed air output by a cabin blower compressor of an aircraft, the cabin blower compressor being driven by a propulsive internal combustion engine of the aircraft via a drive arrangement and the portion being in excess of that required for ventilation of a cabin space of the aircraft, the method comprising the steps of:
(i) applying (406) the portion of the total mass flow rate of compressed air output by the cabin blower compressor to the cathode input of a fuel cell stack comprising at least one fuel cell to generate electrical power;
(ii) applying (408) the electrical power to an electric motor to generate mechanical power; and
(iii) providing (410) the mechanical power either
(a) to the engine; or
(b) to the cabin blower compressor via the drive arrangement.

## Patentansprüche

1. Luftfahrzeug (100; 200), umfassend:
ein Verbrennungstriebwerk (101A; 201A), das angeordnet ist, um dem Luftfahrzeug einen Vortriebsschub bereitzustellen;
ein Kabinengebläsesystem (110; 210), das einen Kabinengebläsekompressor (116; 216) und eine Antriebsanordnung (111, 114, 115; 211, 214, 215) umfasst, das mit dem Verbrennungstriebwerk in Eingriff steht und angeordnet ist, um mechanische Leistung von dem Verbrennungstriebwerk zu dem Kabinengebläsekompressor zu übertragen; und
ein Leitungssystem (120; 220), das angeordnet ist, um einen ersten Teil des Massendurchsatzes von Druckluft, der durch den Kabinengebläsekompressor ausgegeben wird, zu einem Kabinenraum (130; 230) des Luftfahrzeugs zu liefern;
wobei
(i) das Luftfahrzeug ferner einen Brennstoffzellenstapel (142; 242) umfasst, der mindestens eine Brennstoffzelle und einen Elektromotor (146; 246) umfasst, der dazu angeordnet ist, elektrische Leistung von dem Brennstoffzellenstapel zu empfangen;
(ii) das Leitungssystem angeordnet ist, um einen zweiten Teil des Massendurchsatzes der Druckluft, der durch den Kabinengebläsekompressor ausgegeben wird, an den Kathodeneingang (141; 241) des Brennstoffzellenstapels zu liefern, wobei der zweite Teil den für die Belüftung des Kabinenraums erforderlichen Teil übersteigt; und
(iii) der Elektromotor entweder mit einer Welle des Verbrennungstriebwerks, um diesem mechanische Leistung bereitzustellen, oder mit der Antriebsanordnung, um dem Kabinengebläsekompressor über die Antriebsanordnung mechanische Leistung bereitzustellen, in Eingriff steht.

2. Luftfahrzeug (100; 200) nach Anspruch 1, wobei die Antriebsanordnung ein Getriebesystem (114; 214) mit einer Ausgangswelle (115; 215), die mit dem Kabinengebläsekompressor gekoppelt ist, und einer Eingangswelle (111; 211), die mit einer Welle des Verbrennungstriebwerks in Eingriff steht, umfasst.

3. Luftfahrzeug (100) nach Anspruch 2, wobei das Verbrennungstriebwerk ein Gasturbinentriebwerk ist und die Eingangswelle des Getriebesystems und der Elektromotor mit einer gemeinsamen Welle (105) des Gasturbinentriebwerks in Eingriff stehen.

4. Luftfahrzeug (100) nach Anspruch 2, wobei das Verbrennungstriebwerk ein Gasturbinentriebwerk ist, die Eingangswelle des Getriebesystems mit einer ersten Welle des Gasturbinentriebwerks in Eingriff steht und der Elektromotor mit einer zweiten Welle des Gasturbinentriebwerks in Eingriff steht.

5. Luftfahrzeug (200) nach Anspruch 2, wobei der Elektromotor entweder mit der Eingangswelle oder der Ausgangswelle des Getriebesystems in Eingriff steht.

6. Luftfahrzeug (100; 200) nach einem vorhergehenden Anspruch, wobei
(a) der Brennstoffzellenstapel elektrisch von dem Elektromotor getrennt und angeordnet sein kann, um elektrische Leistung an ein Hilfssystem des Luftfahrzeugs zu liefern; oder
(b) der Elektromotor gegebenenfalls mechanisch entweder von dem Verbrennungstriebwerk oder der Antriebsanordnung getrennt sein und angeordnet sein kann, um mechanische Leistung an ein Hilfssystem des Luftfahrzeugs zu liefern.

7. Luftfahrzeug (100; 200) nach einem vorhergehenden Anspruch, wobei das Leitungssystem ein Regelventil (122; 222), eine erste Leitung (121; 221), die den Ausgang (119; 219) des Kabinengebläsesystems mit einem Eingang des Regelventils koppelt, eine zweite Leitung (124; 224), die einen ersten Ausgang des Regelventils mit dem Kathodeneingang des Brennstoffzellenstapels koppelt, und eine dritte Leitung (126; 226), die einen zweiten Ausgang des Regelventils mit dem Kabinenraum des Luftfahrzeugs koppelt, umfasst, wobei das Regelventil betreibbar ist, um jeweilige Anteile des Massendurchsatzes von durch das Kabinengebläsesystem ausgegebener Druckluft, die an den Kabinenraum und an den Kathodeneingang des Brennstoffzellenstapels geliefert werden, zu steuern.

8. Luftfahrzeug (100; 200) nach einem vorhergehenden Anspruch, ferner umfassend eine Vorrichtung (131, 133; 231, 233), die betreibbar ist, um dem Kathodeneingang des Brennstoffzellenstapels unabhängig von dem Kabinengebläsekompressor Druckluft bereitzustellen.

9. Luftfahrzeug (100; 200) nach einem vorhergehenden Anspruch, wobei das Verbrennungstriebwerk ein wasserstoffverbrennendes Triebwerk ist und das Luftfahrzeug ferner einen Brennstofftank (132; 232), der flüssigen Wasserstoff speichert, und Fördermittel (137, 138; 237, 238) umfasst, die angeordnet sind, um Wasserstoffbrennstoff von dem Brennstofftank an das Verbrennungstriebwerk und abgekochten und/oder entlüfteten gasförmigen Wasserstoff von dem Brennstofftank an den Anodeneingang (143; 243) des Brennstoffzellenstapels zu liefern.

10. Verfahren zum Rückgewinnen von Leistung, die mit einem Teil eines Gesamtmassendurchsatzes von Druckluft verbunden ist, der durch einen Kabinengebläsekompressor eines Luftfahrzeugs ausgegeben wird, wobei der Kabinengebläsekompressor durch ein Vortriebsverbrennungstriebwerk des Luftfahrzeugs über eine Antriebsanordnung angetrieben wird und der Teil den für die Belüftung eines Kabinenraums des Luftfahrzeugs erforderlichen Teil übersteigt, wobei das Verfahren die folgenden Schritte umfasst:
(i) Anlegen (406) des Teils des Gesamtmassendurchsatzes der Druckluft, der durch den Kabinengebläsekompressor ausgegeben wird, an den Kathodeneingang eines Brennstoffzellenstapels, der mindestens eine Brennstoffzelle umfasst, um elektrische Leistung zu erzeugen;
(ii) Anlegen (408) der elektrischen Leistung an einen Elektromotor, um mechanische Leistung zu erzeugen; und
(iii) Bereitstellen (410) der mechanischen Leistung entweder
(a) für das Triebwerk; oder
(b) über die Antriebsanordnung für den Kabinengebläsekompressor.

## Revendications

1. Aéronef (100 ; 200) comprenant :
un moteur à combustion interne (101A ; 201A) conçu pour fournir une poussée propulsive à l'aéronef ;
un système de soufflante de cabine (110 ; 210) comprenant un compresseur de soufflante de cabine (116 ; 216) et un agencement d'entraînement (111, 114, 115 ; 211, 214, 215) en prise avec le moteur à combustion interne et conçu pour transmettre une puissance mécanique du moteur à combustion interne au compresseur de soufflante de cabine ; et
un ensemble de conduits (120 ; 220) conçu pour délivrer une première partie du débit massique d'air comprimé délivré par le compresseur de soufflante de cabine à un espace de cabine (130 ; 230) de l'aéronef ;
dans lequel
(i) l'aéronef comprend en outre un empilement de piles à combustible (142 ; 242) comprenant au moins une pile à combustible et un moteur électrique (146 ; 246) conçu pour recevoir une puissance électrique en provenance de l'empilement de piles à combustible ;
(ii) l'ensemble de conduits est conçu pour délivrer une seconde partie du débit massique d'air comprimé sorti par le compresseur de soufflante de cabine à l'entrée de cathode (141 ; 241) de l'empilement de piles à combustible, la seconde partie étant supérieure à celle requise pour la ventilation de l'espace de la cabine ; et
(iii) le moteur électrique est en prise soit avec un arbre du moteur à combustion interne afin de lui fournir une puissance mécanique, soit avec l'agencement d'entraînement afin de fournir une puissance mécanique au compresseur de soufflante de cabine via l'agencement d'entraînement.

2. Aéronef (100 ; 200) selon la revendication 1, dans lequel l'agencement d'entraînement comprend un système de transmission (114 ; 214) ayant un arbre de sortie (115 ; 215) couplé au compresseur de soufflante de cabine et un arbre d'entrée (111 ; 211) en prise avec un arbre du moteur à combustion interne.

3. Aéronef (100) selon la revendication 2, dans lequel le moteur à combustion interne est un moteur à turbine à gaz, et l'arbre d'entrée du système de transmission et le moteur électrique sont en prise avec un arbre commun (105) du moteur à turbine à gaz.

4. Aéronef (100) selon la revendication 2, dans lequel le moteur à combustion interne est un moteur à turbine à gaz, l'arbre d'entrée du système de transmission est en prise avec un premier arbre du moteur à turbine à gaz et le moteur électrique est en prise avec un second arbre du moteur à turbine à gaz.

5. Aéronef (200) selon la revendication 2, dans lequel le moteur électrique est en prise soit avec l'arbre d'entrée soit avec l'arbre de sortie du système de transmission.

6. Aéronef (100 ; 200) selon l'une quelconque des revendications précédentes, dans lequel
(a) l'empilement de piles à combustible peut être électriquement désengagé du moteur électrique et agencé pour délivrer une alimentation électrique à un système auxiliaire de l'aéronef ; ou
(b) le moteur électrique peut être désengagé mécaniquement soit avec le moteur à combustion interne soit avec l'agencement d'entraînement selon le cas et agencé pour délivrer une puissance mécanique à un système auxiliaire de l'aéronef.

7. Aéronef (100 ; 200) selon l'une quelconque des revendications précédentes, dans lequel l'ensemble de conduits comprend une soupape de régulation (122 ; 222), un premier conduit (121 ; 221) couplant la sortie (119 ; 219) du système de soufflante de cabine à une entrée de la soupape de régulation, un deuxième conduit (124 ; 224) couplant une première sortie de la soupape de régulation à l'entrée de cathode de l'empilement de piles à combustible et un troisième conduit (126 ; 226) couplant une seconde sortie de la soupape de régulation à l'espace de cabine de l'aéronef, dans lequel la soupape de régulation peut fonctionner pour commander des proportions respectives du débit massique d'air comprimé sorti par le système de soufflante de cabine qui sont délivrées à l'espace de cabine et à l'entrée de cathode de l'empilement de piles à combustible.

8. Aéronef (100 ; 200) selon l'une quelconque des revendications précédentes, comprenant en outre un appareil (131, 133 ; 231, 233) pouvant fonctionner pour fournir de l'air comprimé à l'entrée de cathode de l'empilement de piles à combustible indépendamment du compresseur de soufflante de cabine.

9. Aéronef (100 ; 200) selon l'une quelconque des revendications précédentes, dans lequel le moteur à combustion interne est un moteur à combustion d'hydrogène et l'aéronef comprend en outre un réservoir de carburant (132 ; 232) stockant de l'hydrogène liquide et des moyens d'alimentation (137, 138 ; 237, 238) agencés pour délivrer le carburant hydrogène du réservoir de carburant vers le moteur à combustion interne et l'hydrogène gazeux évaporé et/ou ventilé du réservoir de carburant vers l'entrée d'anode (143 ; 243) de l'empilement de piles à combustible.

10. Procédé de récupération de puissance associée à une partie d'un débit massique total d'air comprimé sorti par un compresseur de soufflante de cabine d'un aéronef, le compresseur de soufflante de cabine étant entraîné par un moteur à combustion interne propulsif de l'aéronef via un agencement d'entraînement et la partie étant supérieure à celle requise pour la ventilation d'un espace de cabine de l'aéronef, le procédé comprenant les étapes de :
(i) application (406) de la partie du débit massique total d'air comprimé sorti par le compresseur de soufflante de cabine à l'entrée de cathode d'un empilement de piles à combustible comprenant au moins une pile à combustible pour générer de la puissance électrique ;
(ii) application (408) de la puissance électrique à un moteur électrique pour générer une puissance mécanique ; et
(iii) fourniture (410) de la puissance mécanique soit
(a) au moteur ; soit
(b) au compresseur de soufflante de cabine via l'agencement d'entraînement.
